# EUROPÄISCHE PATENTSCHRIFT

(11) **EP 0 304 512 B1**
(45) Veröffentlichungstag und Bekanntmachung des Hinweises auf die Patenterteilung: **17.08.1994**
(21) Anmeldenummer: 87113806.1
(22) Anmeldetag: 22.09.1987
(51) Int. Cl.: H01M 10/34, H01M 10/14, H01M 10/16

(54) **Verfahren zur Montage einer Batterie, insbesondere Rekombinationsbatterie**
Process for assembling a battery, in particular a recombination-type battery
Procédé d'assemblage d'une batterie, en particulier d'une batterie à recombinaison

(30) Priorität: 22.08.1987 DE 3727994
(43) Veröffentlichungstag der Anmeldung: 01.03.1989
(73) Patentinhaber: Accumulatorenwerke Hoppecke Carl Zoellner & Sohn GmbH & Co. KG, D-59914 Brilon (DE)
(72) Erfinder: Sassmannshausen, Günter, Dr. rer.nat., Dipl.-Chem., D-5790 Brilon (DE); Bernardi, Walter, Dipl.-Ing., D-5790 Brilon (DE); Lahme, Norbert, Dipl.-Ing., D-5790 Brilon 2 (DE)
(74) Vertreter: Stenger, Watzke & Ring Patentanwälte

(56) Entgegenhaltungen:
- EP-A- 0 240 915
- FR-A- 1 145 874
- FR-E- 43 473
- GB-A- 2 087 636
- GB-A- 2 125 611
- GB-A- 2 160 701
- US-A- 4 131 723
- US-A- 4 336 314
- PATENT ABSTRACTS OF JAPAN, Band 8, Nr. 194 (E-264)[1631], 6. September 1984; & JP-A-59 83 362 (MATSUSHITA DENKI SANGYO K.K.) 14-05-1984
- IDEM
- PATENT ABSTRACTS OF JAPAN, Band 5, Nr. 11 (E-42)[683], 23. Januar 1981; & JP-A-55 139 770 (NIPPON DENCHI K.K.) 31-10-1980
- PATENT ABSTRACTS OF JAPAN, Band 12, Nr. 99 (E-594)[2946], 31. März 1988; & JP-A-62 229 667 (SHIN KOBE ELECTRIC MACH CO., LTD) 08-10-1987
- PATENT ABSTRACTS OF JAPAN, Band 7, Nr. 94 (E-171)[1239], 20. April 1983; & JP-A-58 18 882 (YUASA DENCHI K.K.) 03-02-1983
- PATENT ABSTRACTS OF JAPAN, Band 9, Nr. 8 (E-289)[1731], 12. Januar 1985; & JP-A-59 157 970 (SHINKOUBE DENKI K.K.) 07-09-1984
- PATENT ABSTRACTS OF JAPAN, Band 9, Nr. 131 (E-319)[1854], 6. Juni 1985; & JP-A-60 17 866 (MATSUSHITA DENKI SANGYO K.K.) 29-01-1985
- PATENT ABSTRACTS OF JAPAN, Band 9, Nr. 173 (E-329)[1896], 18. Juli 1985; & JP-A-60 47 375 (SHINKOUBE DENKI K.K.) 14-03-1985
- IDEM
- PATENT ABSTRACTS OF JAPAN, Band 4, Nr. 32 (E-2)[514], 19. März 1980; & JP-A-55 4841 (SHINKOUBE DENKI K.K.) 14-01-1980
- PATENT ABSTRACTS OF JAPAN, Band 5, Nr. 11 (E-42)[683], 23. Januar 1981; & JP-A-55 139 769 (NIPPON DENCHI K.K.) 31-10-1980
- PATENT ABSTRACTS OF JAPAN, Band 9, Nr. 173 (E-329)[1896], 18. Juli 1985; & JP-A-60 47 374 (SKINKOUBE DENKI K.K.) 14-03-1985
- PATENT ABSTRACTS OF JAPAN, Band 8, Nr. 84 (E-239)[1521], 18. April 1984; & JP-A-59 5575 SHINKOUBE DENKI K.K.) 12-01-1984
- PATENT ABSTRACTS OF JAPAN, Band 5, Nr. 3 (E-40)[675], 10. Januar 1981; & JP-A-55 133 761 (NIPPON DENCHI K.K.) 17-10-1980

## Beschreibung

Die Erfindung betrifft ein Verfahren zur Montage einer Batterie, insbesondere Rekombinationsbatterie, bei dem ein Plattenblock, der aus parallel zueinander angeordneten Elektrodenplatten sowie aus zwischen diesen angeordneten flächigen Absorbern, beispielsweise aus einem Glasfaservlies, zum Festlegen des Elektrolyten der Batterie besteht, im ungepreßten Zustand in ein Batteriegehäuse eingesetzt und anschließend durch Aufblähen eines jeweils im zu den Elektrodenplatten parallelen Zwischenraum zwischen dem Plattenblock und der entsprechenden Innenwand des Batteriegehäuses angeordneten flexiblen Sacks mittels eines Überdruckmittels zur Erzeugung eines Preßdruckes auf den Plattenblock in senkrechter Richtung zur Ebene der Elektrodenplatten unter Abstützung an den Innenwänden des Batteriegehäuses dauerhaft zusammengepreßt wird.

Es sind sogenannte Rekombinationsbatterien bekannt, bei denen es sich um wartungsfreie Batterien mit Gasverzehr und festgelegtem Elektrolyten in verschlossener Ausführung handelt. Derartige Batterien werden als ortsfeste Batterien, Starterbatterien oder Traktionsbatterien eingesetzt. Zur Minimierung des Wasserverbrauchs und damit zu einer weitgehenden Wartungsfreiheit der Batterie erfolgt eine interne Rekombination mit einem Sauerstoffverzehr in den geschlossenen Zellen.

Derartige Rekombinationsbatterien zeichnen sich durch einen festigelegten Elektrolyten aus, was bedeutet, daß der Elektrolyt in einem Absorber gebunden ist, wobei dieser Absorber beispielsweise ein Glasfaservlies oder eine Glasfasermatte sein kann, die ca. 95 % an freiem Volumen aufweist, das den jeweiligen Elektrolyten in der Art eines Schwammes aufsaugt bzw. aufnimmt.

Damit die Rekombinationsbatterie voll funktionstüchtig ist, muß das Glasfaservlies oder allgemein der Absorber in einem ständigen innigen Kontakt mit den Elektrodenplatten stehen, d.h. die Elektrodenplatten müssen einen Pressdruck auf den dazwischen angeordneten Absorber ausüben. Dieser Pressdruck muß dauerhaft über die Lebensdauer der Rekombinationsbatterie aufrechterhalten werden. Die Folge des Auffächerns der Elektrodenplatten einerseits und der Absorber andererseits wäre ein totaler Batterieausfall oder zumindest eine Leistungseinbuße.

Diese Pressung auf den aus den Elektrodenplatten sowie aus den Absorbern bestehenden Plattenblocks wird durch des Batteriegehäuse selbst ausgeübt, indem der Plattenblock unter Kompression in das Batteriegehäuse eingesetzt wird. Dieses Einsetzen ist jedoch verfahrenstechnisch sehr schwierig, da ein vorgespanntes Objekt, in diesem Fall der Plattenblock, nur mit Mühe und großen Anstrengungen unbeschädigt in ein Batteriegehäuse gebracht werden kann. Dies liegt darin begründet, daß beispielsweise ein Glasfaservlies sehr empfindlich ist und sehr leicht beschädigt werden kann, so daß beim Einsetzen des vergespannten Plattenblockes in das Batteriegehäuse sehr große Ausschüsse infolge fehlerhafter Batterien entstehen. Da der Absorber zudem noch die Funktion eines Abstandhalters zwischen den Elektrodenplatten besitzt, können such bei einer Beschädigung des Absorbers sehr leicht Kurzschlüsse auftreten, insbesondere im Kantenbereich des Plattenblockes, wo Beschädigungen sehr leicht erfolgen. Zudem muß das Batteriegehäuse sehr massiv ausgelegt sein, um die Spannkräfte des Plattenblockes aufzunehmen.

Aus der JP-A-55-133761 ist ein Verfahren der eingangs genannten Art bekannt, welches die Verwendung von aufblasbaren Säcken als Stütz- und Schutzelemente der Batterieplatten vorsieht. Durch das Aufblähen der Säcke wird in senkrechter Richtung zur Ebene der Elektrodenplatten ein Pressdruck erzeugt, der den Plattenblock nach Verschließen der Sacköffnungen dauerhaft zusammenpreßt.

Davon ausgehend liegt der Erfindung die Aufgabe zugrunde, das bekannte Verfahren zur Montage einer Batterie, insbesondere zur Montage einer Rekombinationsbatterie derart weiterzuentwickeln, daß unter Vereinfachung des Montagevorgangs beim Einsetzen des Plattenblocks in das Batteriegehäuse eine Beschädigung vermieden wird, wobei eine leichte Handhabung und ein besserer Rundumschutz für die Batterieplatten, auch gegen schockartige Bewegungen, erreicht werden soll.

Als technische Löschung wird erfindungsgemäß vorgeschlagen, daß vor dem Einsetzen in das Batteriegehäuse der noch ungepreßte Plattenblock in einen den flexiblen Sack bildenden Ringschlauch, insbesondere in einen Ringfolienschlauch gehüllt und anschließend der Plattenblock mit dem ihn umhüllenden Ringschlauch in das Batteriegehäuse eingesetzt wird.

Durch die Pressung des Plattenblockes außerhalb des Batteriegehäuses und vor dem Einsetzen in das Batteriegehäuse wird der Vorteil erzielt, daß der Plattenblock ohne große Probleme in das Batteriegehäuse eingesetzt werden kann, ohne daß Beschädigungen zu befürchten sind, wobei weiterhin der Plattenblock unter Vorspannung steht, so daß ein inniger Kontakt des Absorbers mit den Elektrodenplatten gewährleistet ist. Auf diese Weise wird die Montage der Batterie erheblich erleichtert und der Ausschuß erheblich vermindert, ohne daß der Plattenblock gewissermaßen wie ein rohes Ei behandelt werden muß. Durch die äußeren Pressmittel erfolgt darüber hinaus eine konstante und sichere Pressung. Darüber hinaus ist neben einen problemlosen Einsetzen des Plattenblockes in das Batteriegehäuse auch eine Wiederentnahme des Plattenblockes aus dem Batteriegehäuse möglich, so daß die Batterie bei Fehlern leicht repariert werden kann und damit sehr wartungsfreundlich ist.

Mit der vorgeschlagenen Lösung ist es möglich, beim Einsetzen des Plattenblockes in das Batteriegehäuse eine Beschädigung zu vermeiden, da der Plattenblock erfindungsgemäß vor dem Einsetzen in das Batteriegehäuse in den Ringschlauch insbesondere aus einer elastischen, flexiblen Folie gehüllt wird, der den noch ungepressten Plattenblock als Schutzhülle umgibt. Nach dem Einsetzen des so geschützten Plattenblockes in das Batteriegehäuse wird dann der Plattenblock unter Vorspannung gebracht, indem in den Zwischenraum des Ringschlauchs ein Überdruckmittel gefüllt wird, das sich einerseits an den Innenwände des Batteriegehäuses und andererseits an den Flächen der Elektrodenplatten abstützt, so daß insgesamt der Plattenblock zusammengepreßt wird. Ganz am Schluß wird dann der Ringschlauch verschlossen, so daß kein Überdruckmittel entweichen kann und die Verspannung des Plattenblocks auf Dauer erhalten bleibt. Als Überdruckmittel kann ein Gas oder eine Flüssigkeit verwendet werden.

Weitere Einzelheiten und Vorteile der Erfindung ergeben sich aus der nachfolgenden Beschreibung der zugehörigen Zeichnungen, in denen Plattenblöcke für Batterien schematisch dargestellt sind. In den Zeichnungen zeigen:
- Fig. 1: eine Seitenansicht eines Plattenblockes, der noch nicht mit Pressmitteln versehen ist;
- Fig. 2: eine Draufsicht auf den Plattenblock aus Fig. 1;
- Fig. 3: einen Schnitt entlang der Linie III-III in Fig 2;
- Fig. 4: eine zu Fig. 3 entsprechende Darstellung, jedoch mit eines modifizierten Abstandhalter in Gitterform;
- Fig. 5: eine Draufsicht auf eine Ausführungsform, bei der ein noch ungepresstor Plattenblock in einen Ringschlauch gehüllt und der so umhüllte Plattenblock in ein Batteriegehäuse eingesetzt ist;
- Fig. 6: die Anordnung aus Fig. 5, jedoch nachdem zur Erzeugung einis Preßdruckes auf den Plattenblock ein Überdruckmittel eingefüllt worden ist.

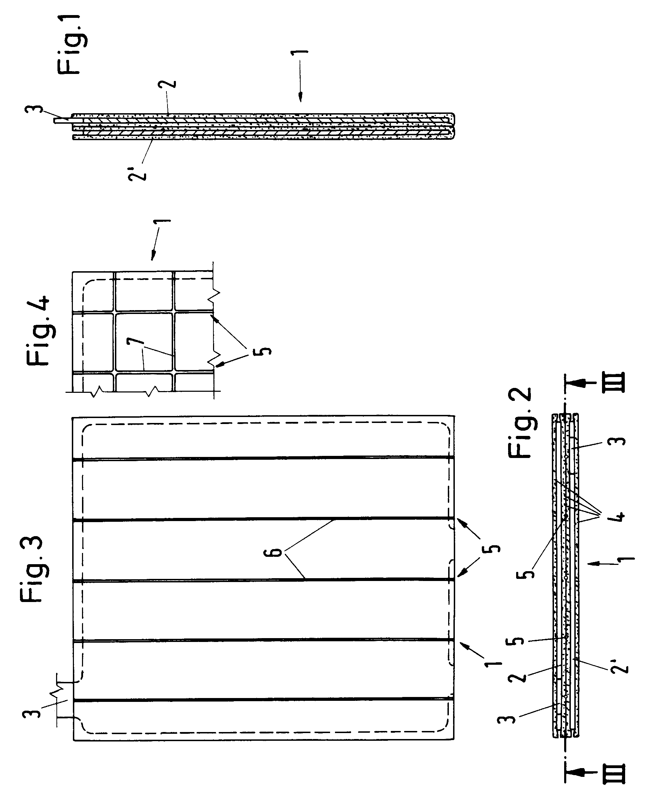

In den Fig. 1 bis 4 ist ein Plattenblock 1 beispielsweise für eine Rekombinationsbatterie dargestellt. Dieser Plattenblock 1 besteht aus den positiven und negativen Elektrodenplatten 2, 2', die bespielsweise Bleiplatten sein können. Die oberen Enden dieser Elektrodenplatten 2, 2' sind mit Fahnen 3 für den Stromanschluß versehen.

Zwischen den Elektrodenplatten 2, 2' sowie außen an den Elektrodenplatten 2,2' ist ein flächiger Absorber 4 angeordnet wobei, wie insbesondere in Fig. 1 zu erkennen ist, jede Elektrodenplatte 2, 2' in jeweils einen Absorber 4 eingeschlagen ist. Dieser Absorber 4 kann beispielsweise ein Glasfaservlies oder eine Glasfasermatte sein. In des Absorber 4 ist der Elektrolyt in Form einer Säure (oder auch bei FNC als Lauge) festgelegt, d.h. der Absorber 4 saugt den Elektrolyten schwammartig auf, da er ein freies Volumen von ca. 95° aufweist.

Insbesondere in den Schnittdarstellungen gemäß Fig. 3 und 4 ist zu erkennen, daß zwischen den beiden Elektrodenplatten 2, 2' im Absorber 4 ein Abstandhalter 5 eingebettet ist, der entweder aus parallel zueinander verlaufenden Stäben 6 (Fig. 3) oder aus einem Gitter 7 (Fig. 4) besteht. Der Abstandhalter 5 verhindert, daß die Elektrodenplatten 2, 2' miteinander Kontakt bekommen und somit unter Umständen einen Kurzschluß innerhalb der Batterie verursachen.

Der in den Fig. 1 bis 4 dargestellte Plattenblock 1 ist im Zustand vor dem Einsetzen in ein nicht dargestelltes Batteriegehäuse gezeigt. Da im eingebauten Zustand die Elektrodenplatten 2, 2' im innigen Kontakt mit dem Absorber 4 stehen müssen, muß der Plattenblock 1 einer Pressung unterworfen werden.

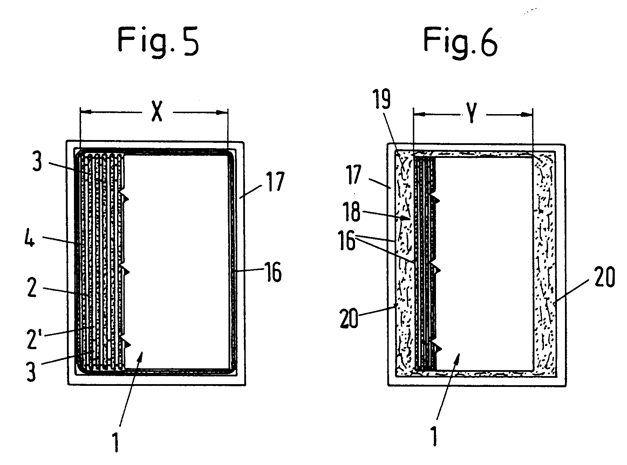

Die in den Fig. 5 und 6 dargestellte Auführungsform zeichnet sich dadurch aus, daß die Vorspannung (Pressung) auf den Plattenblock 1 nach dem Einsetzen in ein Batteriegehäuse aufgebracht wird. Zu diesem Zweck wird der noch ungepraßte Plattenblock 1 in einen Ringschlauch 16 geschoben, der beispielsweise ein Ringfolienschlauch aus einem elastischen Material sein kann. Der so mit dem Ringschlauch 16 versehene und dadurch geschützte Plattenblock 1 wird anschließend in ein Batteriegehäuse 17 eingesetzt, wie dies in Fig. 5 zu erkennen ist.

Der Ringschlauch 16 bildet zwischen sich und den Elektrodenplatten 2, 2' auf beiden Seiten im Inneren jeweils Zwischenräume 18. In diese Zwischenräume 18 wird ein Überdruckmittel 19 gefüllt, das beispielsweise ein Gas oder eine Flüssigkeit sein kann. Dieses Überdruckmittel 19 stützt sich sowohl an der Innenwand 20 des Batteriegehäuses 17 als auch an den Elektrodenplatten 2, 2' ab, so daß sich die Dicke des Plattenblockes 1 von X auf die Dicke Y durch zusammenpressen verringert wird, wie dies in Fig. 6 zu erkennen ist. Nach dieser Vorspannung des Plattenblockes 1 wird der Ringschlauch 16 verschlossen, so daß das Überdruckmittel 19 nicht mehr entweichen kann.

### Bezugszeichenliste

- 1: Plattenblock
- 2: Elektrodenplatte
- 2': Elektrodenplatte
- 3: Fahne
- 4: Absorber
- 5: Abstandhalter
- 6: Stab
- 7: Gitter
- 16: Ringschlauch
- 17: Batteriegehäuse
- 18: Zwischenraum
- 19: Überdruckmittel
- 20: Innenwand
- X: Dicke Plattenblock (ungepresst)
- Y: Dicke Plattenblock (gepresst)

## Patentansprüche

1. Verfahren zur Montage einer Batterie, insbesondere Rekombinationsbatterie,
bei dem ein Plattenblock (1), der aus parallel zueinander angeordneten Elektrodenplatten (2,2') sowie aus zwischen diesen angeordneten flächigen Absorbern (4), beispielsweise aus einem Glasfaservlies, zum Festlegen des Elektrolyten der Batterie besteht, im ungepreßten Zustand in ein Batteriegehäuse (17) eingesetzt und anschließend durch Aufblähen eines jeweils im zu den Elektrodenplatten (2,2') parallelen Zwischenraum (18) zwischen dem Plattenblock (1) und der entsprechenden Innenwand (20) des Batteriegehäuses (17) angeordneten flexiblen Sacks mittels eines Überdruckmittels (19) zur Erzeugung eines Preßdruckes auf den Plattenblock (1) in senkrechter Richtung zur Ebene der Elektrodenplatten (2,2') unter Abstützung an den Innenwänden (20) des Batteriegehäuses dauerhaft zusammengepreßt wird,
**dadurch gekennzeichnet,**
daß vor dem Einsetzen in das Batteriegehäuse (17) der noch ungepreßte Plattenblock (1) in einen den flexiblen Sack bildenden Ringschlauch (16), insbesondere in einen Ringfolienschlauch gehüllt und anschließend der Plattenblock (1) mit dem ihn umhüllenden Ringschlauch (16) in das Batteriegehäuse (17) eingesetzt wird.

2. Verfahren nach Anspruch 1, dadurch gekennzeichnet, daß als Überdruckmittel (19) ein Gas oder eine Flüssigkeit verwendet wird.

## Claims

1. Method for mounting a battery, in particular a recombination battery, in which a plate block (1), which consists of electrode plates (2, 2') arranged parallel to one another and of two-dimensional absorbers (4) for fixing the electrolyte of the battery, which are arranged between said electrode plates and are made, for example, from glass fibre matting, is inserted in the unpressed state into a battery box (17) and subsequently permanently compressed, in a manner supported against the inner walls (20) of the battery box, by inflating a flexible bag, which is respectively arranged in the interspace (18) located between the plate block (1) and the corresponding inner wall (20) of the battery box (17) and parallel to the electrode plates (2, 2'), with the aid of an overpressure means (19) for producing a squeezing pressure against the plate block (1) in the direction perpendicular to the plane of the electrode plates (2, 2'), characterized in that before being inserted into the battery box (17) the as yet unpressed plate block (1) is wrapped in a flexible ring tube (16), in particular in a flexible ring tube made from film, forming the flexible bag and the plate block (1) is subsequently inserted together with the flexible ring tube (16) wrapped around it into the battery box (17).

2. Method according to Claim 1, characterized in that a gas or a liquid is used as the overpressure means (19).

## Revendications

1. Procédé d'assemblage d'une batterie, en particulier d'une batterie à recombinaison, dans lequel un bloc de plaques (1), qui est constitué de plaques formant électrodes (2, 2') disposées parallèlement les unes aux autres ainsi que de matériaux absorbants plats (4) disposés entre celles-ci et constitués par exemple d'une nappe en fibres de verre pour immobiliser les électrolytes de la batterie, est introduit dans un bac de batterie (17) à l'état non comprimé et est ensuite comprimé de manière durable en gonflant, par un moyen de surpression (19), un sac souple, qui est disposé dans l'interstice (18) parallèle aux plaques formant électrodes (2, 2') et compris entre le bloc de plaques (1) et la paroi intérieure correspondante (20) du bac de batterie (17), afin d'exercer une pression de compression sur le bloc de plaques (1) perpendiculairement au plan des plaques formant électrodes (2, 2') en prenant appui sur les parois intérieures (20) du bac de batterie, caractérisé en ce que, avant sa mise en place dans le bac de batterie (17), le bloc de plaques non encore comprimé (1) est enveloppé dans un boyau annulaire (16) formant le sac souple, en particulier dans un boyau annulaire en film, après quoi le bloc de plaques (1) enveloppé dans le boyau annulaire (16) est introduit dans le bac de batterie (17).

2. Procédé selon la revendication 1, caractérisé en ce que le moyen de surpression employé (19) est un gaz ou un liquide.
